# EUROPÄISCHE PATENTSCHRIFT

(11) **EP 4 613 940 B1**
(45) Veröffentlichungstag und Bekanntmachung des Hinweises auf die Patenterteilung: **15.07.2026**
(21) Anmeldenummer: 24215156.1
(22) Anmeldetag: 25.11.2024
(51) Int. Cl.: E02F 3/36

(54) **DREH- UND/ODER SCHWENKAGGREGAT**
ROTATING AND/OR PIVOTING AGGREGATE
ENSEMBLE ROTATIF ET/OU PIVOTANT

(30) Priorität: 05.03.2024 DE 102024106244
(43) Veröffentlichungstag der Anmeldung: 10.09.2025
(73) Patentinhaber: OilQuick Deutschland KG, 82297 Steindorf (DE)
(72) Erfinder: Schauer, Stefan, 86438 Kissing (DE)
(74) Vertreter: Charrier Rapp & Liebau

(56) Entgegenhaltungen:
- WO-A1-2020/151876
- DE-B3- 102022 132 871
- KR-B1- 101 846 973

## Beschreibung

Die Erfindung betrifft ein Dreh- und/oder Schwenkaggregat zum Anbau an eine Baumaschine nach dem Oberbegriff des Anspruchs 1. Eine solche Maschine ist in Dokument DE 10 2022 132871 B3 offenbart.

Derartige Dreh- und/oder Schwenkaggregate werden an Baggern oder anderen vergleichbaren Baumaschinen zwischen einem Anbauteil der Baumaschine und dem Werkzeug als Dreh- und/oder Schwenk-Aggregat zur Erweiterung der Bewegungsmöglichkeiten eingesetzt. Solche Dreh- und Schwenkaggregate enthalten üblicherweise ein an der Baumaschine montierbares Anschlussteil und einen an dem Anschlussteil beweglich angeordneten Träger zur Ankopplung eines Werkzeugs oder Anbaugeräts, wobei der Träger durch einen Drehantrieb um eine Drehachse motorisch drehbar und/oder durch einen Schwenkantrieb um eine zur Drehachse orthogonale Schwenkachse kippbar an dem Anschlussteil angeordnet ist. Aus der DE 10 2020 127 313 B3 ist ein auch als Tiltrotator bezeichnetes kombiniertes Dreh- und Schwenkaggregat bekannt. Dort ist der Träger eines Schnellwechslers mittels eines hydraulischen Drehantriebs um eine Drehachse drehbar und mittels eines hydraulischen Schwenkantriebs um eine zur Drehachse orthogonale Schwenkachse schwenkbar an einem an einem Bagger montierbaren Anschlussteil angeordnet. Durch einen derartigen Tiltrotator können die an dem Schnellwechsler angekoppelten Anbaugeräte, wie z.B. Schwenklöffel, Greifer, Scheren, Verdichter, Magnete, Hydraulikhammer oder dgl., nicht nur um eine quer zur Längsachse eines Baggerstiels angeordnete Schwenkachse, sondern auch um eine zur dieser Schwenkachse orthogonale Drehachse gedreht werden.

Dreh- und/oder Schwenkaggregate der vorstehend genannten Art weisen üblicherweise eine Vielzahl von unterschiedlichen Schmierstellen auf, die zur Gewährleistung eines ordnungsgemäßen Betriebs und zur Vermeidung von Verschleißerscheinungen regelmäßig geschmiert werden müssen. Allerdings wird die regelmäßige Schmierung beim täglichen Betrieb vielfach vernachlässigt oder vergessen, was zu unerwünschtem Verschleiß und dadurch bedingten Beschädigungen und Störungen des Betriebsablaufs führen kann.

Aufgabe der Erfindung ist es, ein Dreh- und/oder Schwenkaggregat der eingangs genannten Art zu schaffen, das eine regelmäßige Schmierung der unterschiedlichen Schmierstellen auch ohne gesondertes Zutun gewährleistet.

Diese Aufgabe wird durch ein Dreh- und/oder Schwenkaggregat mit den Merkmalen des Anspruchs 1 gelöst. Zweckmäßige Ausgestaltungen und vorteilhafte Weiterbildungen der Erfindung sind in den Unteransprüchen angegeben.

Das erfindungsgemäße Dreh- und/oder Schwenkaggregat enthält ein an der Baumaschine montierbares Anschlussteil und einen an dem Anschlussteil beweglich angeordneten Träger zur Ankopplung eines Werkzeugs oder Anbaugeräts, wobei der Träger durch einen Drehantrieb um eine Drehachse motorisch drehbar und/oder durch einen Schwenkantrieb um eine Schwenkachse kippbar an dem Anschlussteil angeordnet ist. Das Dreh- und/oder Schwenkaggregat enthält außerdem eine zentrale Schmiermittelversorgung mit einer automatisch betätigbaren und mit einem Schmiermittelreservoir versehenen Schmiermittelpumpe. Durch die an dem Dreh- und/oder Schwenkaggregat angeordnete, automatisch betätigbare Schmiermittelpumpe können die unterschiedlichen Schmierstellen des Dreh- und/oder Schwenkaggregats auch ohne Schmiermittelverbindung zu einer Zentralschmieranlage an der Baumaschine und ohne gesondertes Zutun durch den Bediener mit einem in dem Schmiermittelreservoir bereitgestellten Schmiermittel versorgt werden. Die Aktivierung der Schmiermittelpumpe kann automatisch z.B. bei der Betätigung des Dreh- und/oder Schwenkantriebs oder beim Starten der der Baumaschine erfolgen. Dadurch kann das für die Vermeidung von Verschleiß wichtige Abschmieren der unterschiedlichen Schmierstellen nicht vergessen werden. Durch die am Dreh- und/oder Schwenkaggregat integrierte und von der Zentralschmieranlage der Baumaschine unabhängige Schmiermittelversorgung am Dreh- und/oder Schwenkaggregat sind keine Schmiermittelleitungen und ggf. hierfür speziell ausgelegte Kupplungen zwischen dem Dreh- und/oder Schwenkaggregat und einer an der Baumaschine vorgesehenen Zentralschmieranlage erforderlich.

In einer besonders zweckmäßigen Ausführung ist an dem Anschlussteil ein um eine Schwenkachse schwenkbar gelagertes und durch einen Schwenkantrieb kippbares Gehäuseteil angeordnet, in dem der Träger um eine zur Schwenkachse orthogonale Drehachse drehbar gelagert durch den Drehantrieb motorisch drehbar ist. Durch eine derartiges, auch als Tiltrotator bezeichnetes Dreh- und Schwenkaggregat können die an dem Dreh- und Schwenkaggregat angekoppelten Anbaugeräte, wie z.B. Schwenklöffel, Greifer, Scheren, Verdichter, Magnete, Hydraulikhammer oder dgl., nicht nur um eine quer zur Längsachse eines Baggerstiels angeordnete Schwenkachse, sondern auch um eine zur dieser Schwenkachse orthogonale Drehachse gedreht werden.

In einer besonders zweckmäßigen Ausführung ist die Schmiermittelpumpe über eine Versorgungsleitung mit einem Verteileraggregat zur Verteilung des durch die Schmiermittelpumpe geförderten Schmiermittels an die unterschiedlichen Schmierstellen verbunden. Dadurch kann das Schmiermittel in einer vorgegebenen Weise zu den jeweiligen Schmierstellen gelangen. Über das Verteileraggregat kann die Schmiermittelmenge, welche die einzelnen Schmierstellen benötigen, vorgegeben werden. An das Verteileraggregat können mehrere zu den unterschiedlichen Schmierstellen führende Schmiermittelversorgungsleitungen angeschlossen sein.

Zweckmäßigerweise ist an der Schmiermittelpumpe eine Schmiermengenreguliereinrichtung zur Einstellung der durch die Schmiermittelpumpe bei deren Aktivierung geförderten Schmiermittelmenge angeordnet. Dadurch kann die bei der Aktivierung der Schmiermittelpumpe durch diese aus dem Schmiermittelreservoir geförderte Schmiermittelmenge eingestellt werden.

Die Schmiermittelpumpe kann auf oder an dem um die Schwenkachse kippbaren Gehäuseteil des Dreh- und/oder Schwenkaggregats angeordnet sein. Auch das Verteileraggregat ist vorzugsweise auf bzw. an dem um die Schwenkachse kippbaren Gehäuseteil angeordnet.

In einer besonders vorteilhaften Ausführung kann die Schmiermittelpumpe als hydraulisch betätigte Schmiermittelpumpe mit einem hydraulisch betätigten Pumpkolben ausgeführt sein. Die Schmiermittelpumpe kann aber auch elektrisch betätigt sein und z.B. durch elektrische Ansteuerung beim Starten der Baumaschine aktiviert werden. Auch dadurch kann eine regelmäßige Schmierung des Dreh- und/oder Schwenkaggregats gewährleistet werden.

Die Schmiermittelpumpe kann zweckmäßigerweise durch Ansteuerung des Schwenkantriebs oder durch Ansteuerung des Drehantriebs aktiviert werden. Bei einem hydraulischen Dreh- und Schwenkantrieb und einer hydraulisch betätigten Schmiermittelpumpe kann die Schmiermittelpumpe über eine Bypassleitung mit einem Hydraulikkreis H2 zur Ansteuerung des Schwenkantriebs oder einem Hydraulikkreis H1 zur Ansteuerung des Drehantriebs verbunden sein.

Der Drehantrieb kann einen durch den ersten Hydraulikkreis H1 ansteuerbaren Hydromotor umfassen und der Schwenkantrieb kann durch zwei in entgegengesetzte Richtungen verfahrbare und durch den zweiten Hydraulikkreis H2 ansteuerbare doppelwirkende Stellzylinder gebildet sein.

An dem Träger kann ein zum Ankoppeln eines Werkzeugs ausgebildeter Schnellwechsler angeordnet sein. An dem Träger 6 kann aber auch ein Greifer oder ein anderes Werkzeug unmittelbar angeordnet sein. Außerdem kann der Träger auch als Gehäuse eines Schnellwechslers ausgebildet sein.

Das Anschlussteil kann zwei voneinander beabstandete bolzenförmige Kopplungselemente zur Kopplung des Anschlussteils mit einem Schnellwechsler enthalten. Dadurch kann das Anschlussteil und damit das Dreh- und Schwenkaggregat über einen Schnellwechsler an einem Baggerarm angekoppelt und in Sandwich-Bauweise mit einem weiteren unteren Schnellwechsler zum automatisch Wechsel von Anbauwerkzeugen verwendet werden. Das Anschlussteil kann aber auch fest an einem Baggerarm angebaut sein.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein Dreh- und Schwenkaggregat mit einem Schnellwechsler und einer automatischen Schmiermittelversorgung in einer ersten Perspektivansicht;
- **Figur 2**: vergrößerte Detailansicht des Dreh- und Schwenkaggregats von Figur 1 und
- **Figur 3**: eine hydraulische Schaltungsanordnung zur Ansteuerung der automatischen Schmiermittelversorgung des in den Figuren 1 und 2 gezeigten Dreh- und Schwenkaggregats.

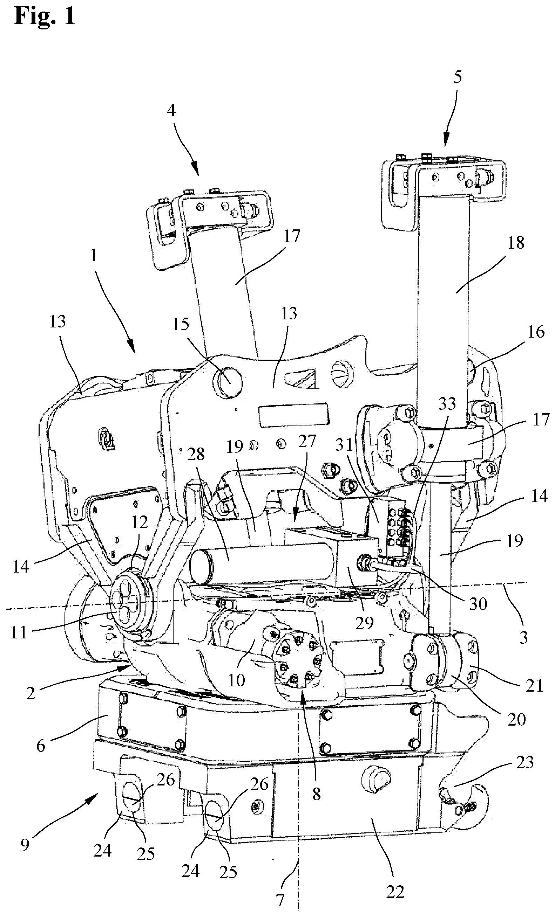

Das in Figur 1 in einer Perspektive dargestellte und auch als Tiltrotator bezeichnete Dreh- und Schwenkaggregat enthält ein entweder direkt oder über einen hydraulisch betätigbaren Schnellwechsler an einem Baggerstiel oder einem anderen Anbauelement einer Baumaschine montierbares Anschlussteil 1, an dem ein Gehäuseteil 2 um eine Schwenkachse 3 schwenkbar gelagert und mittels eines hier durch zwei hydraulische Stellzylinder 4 und 5 gebildeten Schwenkantriebs um die Schwenkachse 3 kippbar angeordnet ist. In dem relativ zum Anschlussteil 1 kippbaren Gehäuseteil 2 ist ein Träger 6 um eine zur Schwenkachse 3 orthogonale Drehachse 7 drehbar gelagert und durch einen Drehantrieb 8 um 360° motorisch drehbar Bei dem gezeigten Ausführungsbeispiel ist an dem Träger 6 ein zum Ankoppeln eines Werkzeugs ausgebildeter Schnellwechsler 9 angeordnet. An dem Träger 6 kann aber auch ein Greifer oder ein anderes Werkzeug unmittelbar angeordnet sein. Außerdem kann der Träger 6 auch als Gehäuse eines Schnellwechslers ausgebildet sein.

Der hier als Hydraulikantrieb ausgebildete Drehantrieb 8 enthält einen Hydromotor 10, durch den der Träger 6 über ein Getriebe mit einem innerhalb des Gehäuseteils 2 angeordneten Schneckenrad und einer durch den Hydromotor 10 drehbaren Antriebsschnecke relativ zum Gehäuseteil 2 um 360° um die Drehachse 7 motorisch drehbar ist.

Das Gehäuseteil 2 ist an dem Anschlussteil 1 über seitlich vorstehende Lagerzapfen 11 innerhalb zweier voneinander beabstandeter Lageraugen 12 um die zur Drehachse 7 orthogonale Schwenkachse 3 schwenkbar angeordnet und kann über den durch die beiden Stellzylinder 4 und 5 gebildeten hydraulischen Schwenkantrieb relativ zum Anschlussteil 1 um ca. +/- 45° um die Schwenkachse 3 geschwenkt werden. Durch den auch als Dreh-SchwenkAntrieb bezeichneten Tiltrotator können die an dem Schnellwechsler 9 angekoppelten Anbaugeräte nicht nur um die Drehachse 7 gedreht, sondern zusätzlich auch gegenüber dem Anschlussteil 1 um die zur Drehachse 7 orthogonale Schwenkachse 3 gekippt werden, wodurch die Bewegungsmöglichkeiten erweitert werden und dadurch der Einsatzbereich vergrößert wird.

Das Anschlussteil 1 weist bei dem gezeigten Ausführungsbeispiel zwei zueinander parallele Seitenwangen 13 sowie vordere und hintere Querstücke 14 mit den daran angeordneten Lageraugen 12 auf. Das Gehäuseteil 2 ist über die beiden Lagerzapfen 11 in den Lageraugen 12 der vorderen und hinteren Querstücke 14 um die Schwenkachse 3 schwenkbar gelagert. In den beiden Seitenwangen 13 sind bei dem gezeigten Anschlussteil 1 zwei zueinander parallele und voneinander beabstandete bolzenförmige Kopplungselemente 15 und 16 zu Verbindung mit einem am Baugerät angeordneten - hier nicht dargestellten - hydraulisch betätigbaren Schnellwechsler angeordnet.

Ein Ausführungsbeispiel für einen an einem Baggerarm oder einem anderen Baugerät angeordneten hydraulisch betätigbaren Schnellwechsler zum automatischen Ankoppeln des Tiltrotators ist in der DE 10 2018 128 479 A1 offenbart. Zu dem an sich bekannten Aufbau und der Funktionsweise eines solchen hydraulisch betätigbaren Schnellwechslers wird auf diese Druckschrift ausdrücklich Bezug genommen. Das Anschlussteil 1 könnte aber auch ohne Zwischenschaltung eines hydraulisch betätigbaren Schnellwechslers direkt an einem Stiel und einer Koppel eines Baggers montiert sein.

Der Schwenkantrieb wird bei der gezeigten Ausführung durch die beiden doppeltwirkenden Stellzylinder 4 und 5 mit jeweils einem über eine Halterung 17 an der jeweiligen Seitenwange 13 des Anschlussteils 1 befestigten Zylindergehäuse 18 und einer im Zylindergehäuse 18 verschiebbar angeordneten und hydraulisch bewegbaren Kolbenstange 19 gebildet. Die freien Enden der Kolbenstangen 19 sind über ein Gelenkauge 20 und eine entsprechenden Halterung 21 mit dem Antriebsgehäuse 9 verbunden ist. Durch entsprechendes Ein- und Ausfahren der beiden Kolbenstangen 19 der Stellzylinder 4 und 5 kann so das Gehäuseteil 2 mit dem darin drehbar gelagerten Träger 6 gegenüber dem Anschlussteil 1 gekippt werden. Der Schwenkantrieb kann aber auch durch einen Hydromotor oder einen anderen geeigneten Hydroantrieb gebildet werden.

Der zum Ankoppeln eines Anbaugeräts bzw. Werkzeugs ausgebildete Schnellwechsler 9 enthält ein als Schweißkonstruktion oder als Gußteil ausgeführtes Gehäuse 22, das zur einen Seite hin offene erste Aufnahmen 23 zur Aufnahme und Halterung eines werkzeugseitigen ersten bolzenförmigen Kopplungselements an der einen Seite und zur anderen Seite sowie nach unten offene zweite Aufnahmen 24 zur Aufnahme und Halterung eines werkzeugseitigen zweiten bolzenförmigen Kopplungselements an der anderen Seite aufweist. Die zur der einen Seite offenen ersten Aufnahmen 23 sind klauen- oder gabelförmig ausgeführt. Die zur anderen Seite und nach unten offenen zweiten Aufnahmen 24 weisen eine gekrümmte untere Anlagefläche zur Anlage eines bolzenförmigen Kopplungselements auf. An den zweiten Aufnahmen 24 ist eine manuell oder hydraulisch betätigbare Verriegelungseinrichtung mit zwei innerhalb von Bohrungen 25 zwischen einer ausgefahrenen Verriegelungsstellung und einer eingefahrenen Entriegelungs- bzw. Wechselstellung bewegbaren Verriegelungsbolzen 26 vorgesehen. Die Verriegelungsbolzen 26 können manuell z.B. über einen manuell schwenkbaren Hebel oder hydraulisch zwischen der eingefahrenen Entriegelungs- bzw. Wechselstellung und der ausgefahrenen Verriegelungsstellung bewegt werden. An den Schnellwechsler 9 können so unterschiedliche Werkzeuge oder Anbaugeräte, wie z.B. Schwenklöffel, Greifer, Scheren, Verdichter, Magnete, Hydraulikhammer oder dgl. angekoppelt werden.

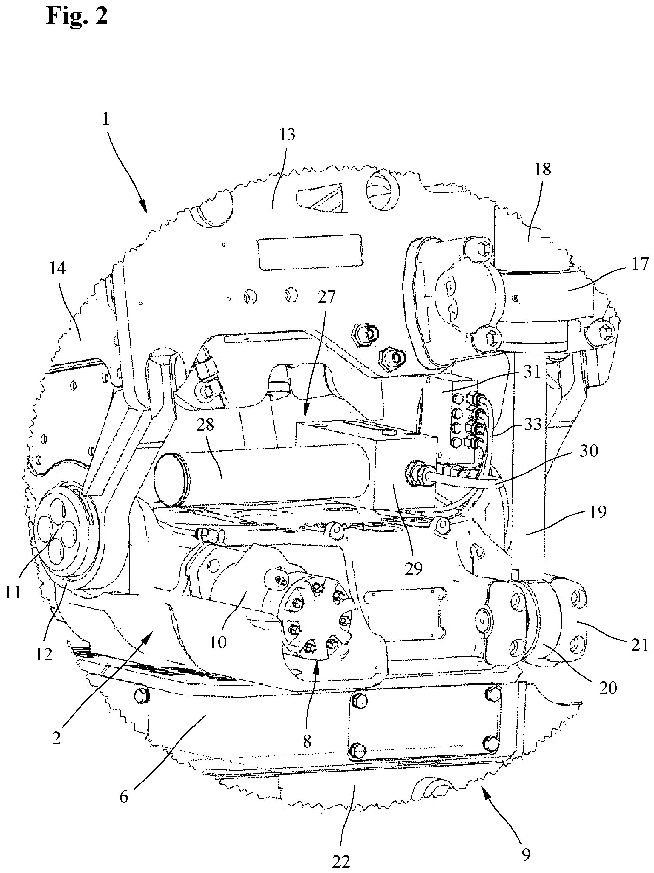

Wie besonders aus der vergrößerten Detailansicht von Figur 2 hervorgeht, enthält der Dreh- und Schwenkantrieb eine zentrale Schmiermittelversorgung 27 mit einer automatisch betätigbaren und mit einem Schmiermittelreservoir 28 versehenen Schmiermittelpumpe 29 und einem mit der Schmiermittelpumpe 29 über eine Versorgungsleitung 30 verbundenen Verteileraggregat 31 zur Verteilung des Schmiermittels an unterschiedliche Schmierstellen 32. Das als Behälter zur Aufnahme einer ausreichenden Menge an Fett oder eines entsprechenden Schmiermittels ausgebildete Schmiermittelreservoir 28 ist an der Schmiermittelpumpe 29 angeordnet und kann mit dieser zusammen auf dem Gehäuseteil 2 montiert sein. Als Schmiermittel kommt z.B. ein Schmierfett zu Einsatz, das in dem Schmiermittelreservoir 28 bereitgestellt wird. Für die Verteilung des Schmiermittels zu den verschiedenen Schmierstellen 32 sind an dem Verteileraggregat 31 mehrere zu den einzelnen Schmierstellen 32 führende Schmiermittelversorgungsleitungen 33 angeschlossen. Über das Verteileraggregat 31 kann die Schmiermittelmenge, welche die einzelnen Schmierstellen 32 benötigen, vorgegeben werden.

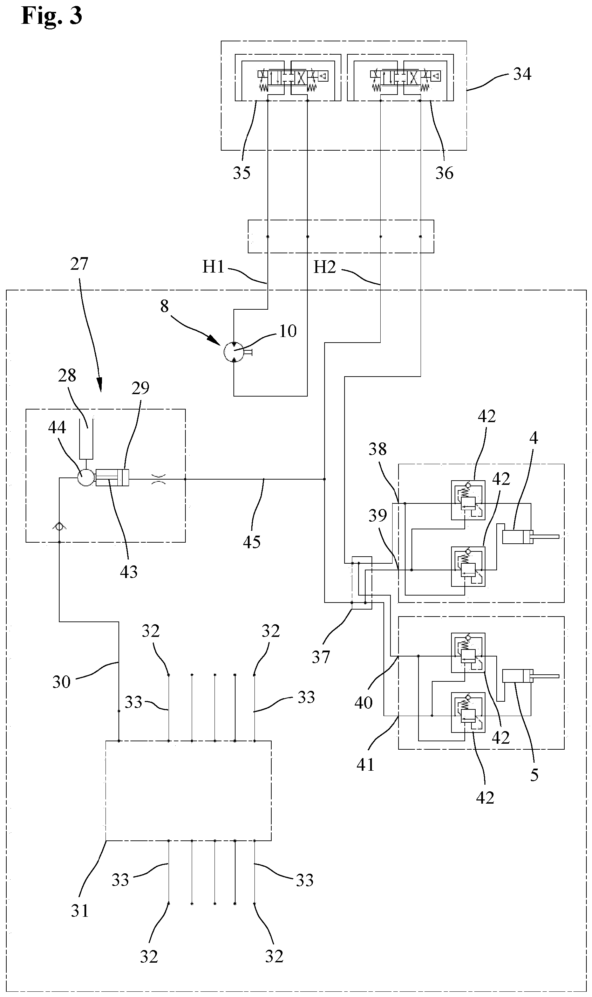

In Figur 3 ist ein Schaltplan einer hydraulischen Schaltungsanordnung zur Ansteuerung des hier durch den Hydromotors 10 gebildeten Drehantriebs 3, des durch die beiden Stellzylinder 5 und 6 gebildeten Schwenkantriebs und der Schmiermittelpumpe 29 der zentralen Schmiermittelversorgung 27 des Dreh- und Schwenkantriebs gezeigt. Die Schaltungsanordnung umfasst eine z.B. an einem Bagger angeordnete Steuereinrichtung 34, die ein als 4/3-Wegeventil ausgebildetes erstes Steuerventil 35 zur Steuerung eines hier für die Ansteuerung des Hydromotors 10 des Drehantriebs 3 verwendeten ersten Hydraulikkreises H1 und ein als 4/3-Wegeventil ausgebildetes zweites Steuerventil 36 zur Steuerung eines hier für die Ansteuerung der beiden Stellzylinder 5 und 6 des Schwenkantriebs verwendeten zweiten Hydraulikkreises H2 umfasst. Durch den zweiten Hydraulikkreis H2 werden die beiden Stellzylinder 4 und 5 des Schwenkantriebs über eine Verzweigung 37 und vier Anschlüsse 38 bis 41 derart angesteuert, dass die Stellzylinder 4 und 5 in entgegengesetzten Richtungen aus- bzw. einfahren und so der Träger 6 um die Schwenkachse 3 gekippt werden kann. Den Anschlüssen für das Ein- und Ausfahren der beiden Stellzylinder 4 und 5 ist jeweils ein Senkbremssperrventil 42 vorgeordnet.

Die Schmiermittelpumpe 29 ist bei der gezeigten Ausführung als hydraulisch betätigte Schmiermittelpumpe mit einem hydraulisch betätigten Pumptkolben 43 und einer Schmiermengenreguliereinrichtung 44 zur Einstellung der geförderten Schmiermenge ausgeführt. Die Ansteuerung der Schmiermittelpumpe 29 erfolgt durch den Hydraulikreis H2 über eine von dem Hydraulikkreis H2 abzweigende Bypassleitung 45. Dadurch wird sichergestellt, dass bei einer Ansteuerung der beiden Stellzylinder 4 und 5 zur Betätigung des Schwenkantriebs gleichzeitig auch die Schmiermittelpumpe 29 zur Versorgung der Schmierstellen 32 mit Schmiermittel aktiviert wird. Die Bypassleitung 45 kann aber auch von dem ersten Hydraulikkreis H1 abzweigen, so dass bei einer Ansteuerung des Hydromotors 10 des Drehantriebs 8 eine Aktivierung der Schmiermittelpumpe 29 erfolgt. Auch dadurch kann eine regelmäßige Schmierung gewährleistet werden.

Die Erfindung ist nicht auf das vorstehend ausführlich beschriebene Dreh- und Schwenkaggregat beschränkt. Die zentrale und automatisch betätigbare Schmiereinrichtung ist auch für reine Dreh- oder Schwenkaggregate einsetzbar.

### Bezugszeichenliste

- 1: Anschlussteil
- 2: Gehäuseteil
- 3: Schwenkachse
- 4: Erster Stellzylinder
- 5: Zweiter Stellzylinder
- 6: Träger
- 7: Schwenkachse
- 8: Drehantrieb
- 9: Schnellwechsler
- 10: Hydromotor
- 11: Lagerzapfen
- 12: Lageraugen
- 13: Seitenwange
- 14: Querstück
- 15: Erstes Kopplungselement
- 16: Zweites Kopplungselement
- 17: Halterung
- 18: Zylindergehäuse
- 19: Kolbenstange
- 20: Gelenkauge
- 21: Halterung
- 22: Gehäuse
- 23: Erste Aufnahme
- 24: Zweite Aufnahme
- 25: Bohrung
- 26: Verriegelungsbolzen
- 27: Zentrale Schmiermittelversorgung
- 28: Schmiermittelreservoir
- 29: Schmiermittelpumpe
- 30: Versorgungsleitung
- 31: Verteileraggregat
- 32: Schmierstelle
- 33: Schmiermittelversorgungsleitung
- 34: Steuereinrichtung
- 35: Erstes Steuerventil
- 36: Zweites Steuerventil
- 37: Verzweigung
- 38: Erster Anschluss
- 39: Zweiter Anschluss
- 40: Dritter Anschluss
- 41: Vierter Anschluss
- 42: Senkbremssperrventil
- 43: Pumpkolben
- 44: Schmiermengenreguliereinrichtung
- 45: Bypassleitung

## Patentansprüche

1. Dreh- und/oder Schwenkaggregat zum Anbau an eine Baumaschine, das ein Anschlussteil (1) und einen an dem Anschlussteil (1) beweglich angeordneten Träger (6) für ein Werkzeug oder einen Schnellwechsler (8) zur Ankopplung eines Werkzeugs oder Anbaugeräts enthält, wobei der Träger (6) durch einen Drehantrieb (8) um eine Drehachse (8) motorisch drehbar und/oder durch einen Schwenkantrieb (4, 5) um eine Schwenkachse (3) kippbar an dem Anschlussteil (1) angeordnet ist, **gekennzeichnet durch** eine zentrale Schmiermittelversorgung (27) mit einer automatisch betätigbaren und mit einem Schmiermittelreservoir (28) versehenen Schmiermittelpumpe (29) zur Förderung eines Schmiermittels an unterschiedliche Schmierstellen (32) des Dreh- und/oder Schwenkaggregats.

2. Dreh- und/oder Schwenkaggregat nach Anspruch 1, **dadurch gekennzeichnet, dass** an dem Anschlussteil (1) ein um die Schwenkachse (3) schwenkbar gelagertes und durch den Schwenkantrieb (4, 5) kippbares Gehäuseteil (2) angeordnet ist, in dem der Träger (6) um die zur Schwenkachse (3) orthogonale Drehachse (7) drehbar gelagert durch den Drehantrieb (8) motorisch drehbar ist.

3. Dreh- und/oder Schwenkaggregat nach Anspruch 1 oder 2, **dadurch gekennzeichnet, dass** die Schmiermittelpumpe (29) über eine Versorgungsleitung (30) mit einem Verteileraggregat (31) zur Verteilung des durch die Schmiermittelpumpe (29) geförderten Schmiermittels an die unterschiedlichen Schmierstellen (32) verbunden ist.

4. Dreh- und/oder Schwenkaggregat nach Anspruch 3, **dadurch gekennzeichnet, dass** an das Verteileraggregat (31) mehrere zu den unterschiedlichen Schmierstellen (32) führende Schmiermittelversorgungsleitungen (33) angeschlossen sind.

5. Dreh- und/oder Schwenkaggregat nach einem der Ansprüche 1 bis 4, **dadurch gekennzeichnet, dass** an der Schmiermittelpumpe (29) eine Schmiermengenreguliereinrichtung (44) zur Einstellung der durch die Schmiermittelpumpe (29) bei deren Aktivierung geförderten Schmiermittelmenge angeordnet ist.

6. Dreh- und/oder Schwenkaggregat nach einem der Ansprüche 1 bis 5, **dadurch gekennzeichnet, dass** die Schmiermittelpumpe (29) an dem Gehäuseteil (2) angeordnet ist.

7. Dreh- und/oder Schwenkaggregat nach einem der Ansprüche 1 bis 6, **dadurch gekennzeichnet, dass** die Schmiermittelpumpe (29) als hydraulisch betätigte Schmiermittelpumpe mit einem hydraulisch betätigten Pumpkolben (43) ausgebildet ist.

8. Dreh- und/oder Schwenkaggregat nach einem der Ansprüche 1 bis 7, **dadurch gekennzeichnet, dass** die Schmiermittelpumpe (29) durch Ansteuerung des Schwenkantriebs (4, 5) oder durch Ansteuerung des Drehantriebs (8) aktiviert wird.

9. Dreh- und/oder Schwenkaggregat nach Anspruch 8, **dadurch gekennzeichnet, dass** die Schmiermittelpumpe (29) über eine Bypassleitung (45) mit einem Hydraulikkreis H2 zur Ansteuerung des Schwenkantriebs (4, 5), einem Hydraulikkreis H1 zur Ansteuerung des Drehantriebs (8) oder einem anderen Hydraulikkreis verbunden ist.

10. Dreh- und/oder Schwenkaggregat nach Anspruch 8, **dadurch gekennzeichnet, dass** der Drehantrieb (8) einen durch den ersten Hydraulikkreis H1 ansteuerbaren Hydromotor (10) umfasst.

11. Dreh- und/oder Schwenkaggregat nach Anspruch 9 oder 10, **dadurch gekennzeichnet, dass** der Schwenkantrieb (4, 5) durch zwei in entgegengesetzte Richtungen verfahrbare und durch den zweiten Hydraulikkreis H2 ansteuerbare doppelwirkende Stellzylinder gebildet wird.

12. Dreh- und/oder Schwenkaggregat nach einem der Ansprüche 1 bis 11, **dadurch gekennzeichnet, dass** an dem Träger (6) ein zum Ankoppeln eines Werkzeugs oder Anbaugeräts ausgebildeter Schnellwechsler (9) angeordnet ist.

13. Dreh- und/oder Schwenkaggregat nach einem der Ansprüche 1 bis 12, **dadurch gekennzeichnet, dass** das Anschlussteil (1) zwei voneinander beabstandete bolzenförmige Kopplungselemente (15, 16) zur Kopplung des Anschlussteils (1) mit einem Schnellwechsler enthält.

## Claims

1. Rotating and/or pivoting aggregate for attachment to a construction machine, which contains a connection part (1) and a support (6) arranged movably on the connection part (1) for a tool or a quick coupler (8) for coupling a tool or attachment, the support (6) being arranged on the connection part (1) such that it can be rotated motorically about an axis of rotation (8) by means of a rotary drive (8) and/or tilted about a pivot axis (3) by means of a pivot drive (4, 5), **characterized by** a central lubricant supply (27) with an automatically actuable lubricant pump (29) provided with a lubricant reservoir (28) for delivering a lubricant to different lubrication points (32) of the rotating and/or pivoting aggregate.

2. Rotating and/or pivoting aggregate according to claim 1, **characterized in that** a housing part (2) is arranged on the connection part (1) which is mounted so as to be pivotable about the pivot axis (3) and can be tilted by the pivot drive (4, 5), in which the support (6) is mounted so as to be rotatable about the axis of rotation (7) orthogonal to the pivot axis (3) and can be motorically rotated by the rotary drive (8).

3. Rotating and/or pivoting aggregate according to claim 1 or 2, **characterized in that** the lubricant pump (29) is connected via a supply line (30) to a distributor unit (31) for distributing the lubricant delivered by the lubricant pump (29) to the different lubrication points (32).

4. Rotating and/or pivoting aggregate according to claim 3, **characterized in that** several lubricant supply lines (33) leading to the different lubrication points (32) are connected to the distributor unit (31).

5. Rotating and/or pivoting aggregate according to one of claims 1 to 4, **characterized in that** a lubricant amount regulation device (44) is arranged on the lubricant pump (29) for adjusting the amount of lubricant delivered by the lubricant pump (29) when it is activated.

6. Rotating and/or pivoting aggregate according to one of claims 1 to 5, **characterized in that** the lubricant pump (29) is arranged on the housing part (2).

7. Rotating and/or pivoting aggregate according to one of claims 1 to 6, **characterized in that** the lubricant pump (29) is designed as a hydraulically actuated lubricant pump with a hydraulically actuated pump piston (43).

8. Rotating and/or pivoting aggregate according to one of claims 1 to 7, **characterized in that** the lubricant pump (29) is activated by actuating the pivot drive (4, 5) or by actuating the rotary drive (8).

9. Rotating and/or pivoting aggregate according to claim 8, **characterized in that** the lubricant pump (29) is connected via a bypass line (45) to a hydraulic circuit H2 for activating the pivot drive (4, 5), a hydraulic circuit H1 for activating the rotary drive (8) or another hydraulic circuit.

10. Rotating and/or pivoting aggregate according to claim 8, **characterized in that** the rotary drive (8) comprises a hydraulic motor (10) which can be actuated by the first hydraulic circuit H1.

11. Rotating and/or pivoting aggregate according to claim 9 or 10, **characterized in that** the pivot drive (4, 5) is formed by two double-acting actuating cylinders which can be moved in opposite directions and can be actuated by the second hydraulic circuit H2.

12. Rotating and/or pivoting aggregate according to one of claims 1 to 11, **characterized in that** a quick coupler (9) designed for coupling a tool or attachment is arranged on the support (6).

13. Rotating and/or pivoting aggregate according to one of claims 1 to 12, **characterized in that** the connection part (1) contains two spaced-apart bolt-shaped coupling elements (15, 16) for coupling the connection part (1) to a quick coupler.

## Revendications

1. Groupe rotatif et/ou pivotant destiné à être monté sur une machine de chantier, qui contient une pièce de raccordement (1) et un support (6) agencé de manière mobile sur la pièce de raccordement (1) pour un outil ou un dispositif d'échange rapide (8) pour l'accouplement d'un outil ou d'un accessoire, dans lequel le support (6) peut être entraîné en rotation de manière motorisée autour d'un axe de rotation (8) par un entraînement rotatif (8) et/ou est agencé sur la pièce de raccordement (1) de manière à pouvoir basculer autour d'un axe de pivotement (3) par un entraînement pivotant (4, 5), **caractérisé par** une alimentation centrale en lubrifiant (27) comportant une pompe à lubrifiant (29) pouvant être actionnée automatiquement et pourvue d'un réservoir de lubrifiant (28) pour le refoulement d'un lubrifiant vers différents points de lubrification (32) du groupe rotatif et/ou pivotant.

2. Groupe rotatif et/ou pivotant selon la revendication 1,
**caractérisé en ce qu'**une pièce de boîtier (2) placée pivotante autour de l'axe de pivotement (3) et pouvant être basculée par l'entraînement de pivotement (4, 5) est agencée sur la pièce de raccordement (1), pièce de boîtier dans laquelle le support (6) est placé rotatif autour de l'axe de rotation (7) orthogonal à l'axe de pivotement (3) et peut être entraîné en rotation de manière motorisée par l'entraînement de rotation (8).

3. Groupe rotatif et/ou pivotant selon la revendication 1 ou 2,
**caractérisé en ce que** la pompe à lubrifiant (29) est reliée par l'intermédiaire d'une conduite d'alimentation (30) à un groupe de distribution (31) pour distribuer le lubrifiant refoulé par la pompe à lubrifiant (29) aux différents points de lubrification (32).

4. Groupe rotatif et/ou pivotant selon la revendication 3,
**caractérisé en ce que** plusieurs conduites d'alimentation en lubrifiant (33) menant aux différents points de lubrification (32) sont reliées au groupe de distribution (31).

5. Groupe rotatif et/ou pivotant selon l'une des revendications 1 à 4, **caractérisé en ce qu'**un dispositif de régulation de quantité de lubrifiant (44) est agencé sur la pompe à lubrifiant (29) pour régler la quantité de lubrifiant refoulée par la pompe à lubrifiant (29) lors de son activation.

6. Groupe rotatif et/ou pivotant selon l'une des revendications 1 à 5, **caractérisé en ce que** la pompe à lubrifiant (29) est agencée sur la pièce de boîtier (2).

7. Groupe rotatif et/ou pivotant selon l'une des revendications 1 à 6, **caractérisé en ce que** la pompe à lubrifiant (29) est conçue comme une pompe à lubrifiant à actionnement hydraulique comportant un piston de pompe (43) à actionnement hydraulique.

8. Groupe rotatif et/ou pivotant selon l'une des revendications 1 à 7, **caractérisé en ce que** la pompe à lubrifiant (29) est activée par la commande de l'entraînement de pivotement (4, 5) ou par la commande de l'entraînement de rotation (8).

9. Groupe rotatif et/ou pivotant selon la revendication 8,
**caractérisé en ce que** la pompe à lubrifiant (29) est reliée par l'intermédiaire d'une conduite de dérivation (45) à un circuit hydraulique H2 pour la commande de l'entraînement de pivotement (4, 5), à un circuit hydraulique H1 pour la commande de l'entraînement de rotation (8) ou à un autre circuit hydraulique.

10. Groupe rotatif et/ou pivotant selon la revendication 8,
**caractérisé en ce que** l'entraînement de rotation (8) comprend un moteur hydraulique (10) pouvant être commandé par le premier circuit hydraulique H1.

11. Groupe rotatif et/ou pivotant selon la revendication 9 ou 10,
**caractérisé en ce que** l'entraînement de pivotement (4, 5) est formé par deux vérins de réglage à double effet pouvant être déplacés dans des directions opposées et pouvant être commandés par le deuxième circuit hydraulique H2.

12. Groupe rotatif et/ou pivotant selon l'une des revendications 1 à 11, **caractérisée en ce qu'un** dispositif d'échange rapide (9) conçu pour l'accouplement d'un outil ou d'un accessoire est agencé sur le support (6).

13. Groupe rotatif et/ou pivotant selon l'une des revendications 1 à 12, **caractérisé en ce que** la pièce de raccordement (1) contient deux éléments d'accouplement (15, 16) en forme de boulons espacés l'un de l'autre pour l'accouplement de la pièce de raccordement (1) avec un dispositif d'échange rapide.
